(19) Europäisches Patentamt
European Patent Office
Office européen des brevets

(11) EP 2 253 726 A2

(12) **EUROPEAN PATENT APPLICATION**

(43) Date of publication:
24.11.2010 Bulletin 2010/47

(51) Int Cl.:
*C22C 21/00* (2006.01)     *C22C 21/02* (2006.01)
*B32B 15/01* (2006.01)     *C22F 1/04* (2006.01)

(21) Application number: 10162267.8

(22) Date of filing: 07.05.2010

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(30) Priority: 14.05.2009 SE 0950343

(71) Applicant: Sapa Heat Transfer AB
612 81 Finspong (SE)

(72) Inventors:
• Ahl, Linda
  605 60 SVÄRTINGE (SE)
• Norgren, Stefan
  612 36 FINSPÅNG (SE)
• Oskarsson, Anders
  612 32 FINSPÅNG (SE)

(74) Representative: Börlin, Maria et al
Albihns.Zacco
Valhallavägen 117
Box 5581
114 85 Stockholm (SE)

(54) **Aluminium alloys brazing sheet for thin tubes**

(57)     An aluminium alloy brazing sheet comprising: a core material made of an aluminium alloy consisting of $\leq 0.1$ wt% Si, most preferably $\leq 0.06$ wt% Si, $\leq 0.35$ wt% Mg, from 1.0 to 2.0 wt%, preferably 1.4 to 1.8 wt% Mn, from 0.2 to 1.0, preferably 0.6 to 1.0 wt% Cu, $\leq 0.7$ wt% Fe, $\leq 0.3$ wt% each of Zr, Ti, Ni, Hf, V, Cr, In, Sn and $\leq 0.5$ wt% total of Zr, Ti, Ni, Hf, V, Cr, In, Sn, the remainder being Al and unavoidable impurities; and a waterside cladding material clad on at least one side of the core material, said cladding material being made of an aluminium alloy having a potential lower than that of said core material and consisting essentially of 0.5-1.5 wt% of Si, 1.0 to 2.0 wt% preferably 1.4-1.8 wt% of Mn, $\leq 0.15$ wt% Mg, $\leq 0.1\%$ Cu, $\leq 0.7$ wt% Fe, $\leq 1.4$ wt%, preferably $\leq 1.1$ wt%, most preferably $\leq 0.4$ wt% Zn, $\leq 0.3$ wt% each of Zr, Ti, Ni, Hf, V, Cr, In, Sn and $\leq 0.5$ wt% total of Zr, Ti, Ni, Hf, V, Cr, In, Sn; the remainder being Al and unavoidable impurities, wherein the ratio of wt% Si in the waterside clad to wt% Si in the core is at least 5:1, preferably at least 10:1.

Figure 1     Theoretical Cu- and Zn-diffusion profiles, and modelled corrosion potential profile of Cladding A, Zn=0, in combination with Core I.

## Description

### Technical field

The present invention relates an aluminium alloy brazing sheet with high strength and excellent corrosion performance.

### Background

Down-sizing of tube materials puts high demands on the brazing sheet. One aspect is the corrosion performance, both from the internal side of the tube (in contact with liquid coolant) and from the external side. It is an object of the present invention to provide an aluminium alloy brazing sheet that has high strength, has good corrosion resistance on its inner-surface side (coolant side), as well as from the external side, when being used as a tube for e g heat exchangers, as a header plate, and as a heater core of a radiator. It is also an object of the invention to provide a thin brazing sheet material that has a good workability and may be used in corrosive environments.

Previous attempts have been made to improve the corrosion resistance of brazing sheets by adding Zn and Mg to the waterside cladding. The prior art has been focused on the effect of Mg on the strength and Zn has been added in high amounts to provide the sacrificial anode effect. It has been found that Zn is undesirable in higher amounts since for thinner tube materials Zn can diffuse to the braze cladding side and, as a consequence the corrosion resistance of the whole brazing sheet will be inferior, causing pre-stage leakage and failure mode of the end-product.

JP0299325 discloses a core material constituted of an Al-alloy having a composition containing 0.3-1.5% of Mn, 0.3-1.2% of Si, 0.3-1% of Cu and, if necessary, further containing 0.03-0.15% of Zr and composed of the remainder Al and inevitable impurities and clad to the core material a skin material constituted of an Al-alloy having a composition containing 0.3-1.5% of Mn, 0.3-1.2% of Si and, if necessary, 0.03-0.15% of Zr and composed of the remainder of Al and inevitable impurities. This material does not have a sufficiently low Si content of the core to provide a brazing sheet of sufficient corrosion resistance.

### Summary of the invention

The present invention aims at providing an aluminium alloy brazing sheet that has high strength, has good corrosion resistance on its inner-surface side (coolant side) when being used as a tube for e g heat exchangers, as a header plate, and as a heater core of a radiator. It is also an object of the invention to provide a thin brazing sheet material that has a good workability and may be used in corrosive environments.

This is achieved by the aluminium alloy brazing sheet of the present invention. The brazing sheet of the invention comprises a core material made of an aluminium alloy consisting of ≤0.1 wt% Si, most preferably ≤ 0.06wt% Si, ≤ 0.35 wt% Mg, from 1.0 to 2.0 wt%, preferably 1.4 to 1.8 wt% Mn, from 0.2 to1.0, preferably 0.6 to 1.0 wt% Cu, ≤0.7 wt% Fe, ≤0.3 wt% each of Zr, Ti, Ni, Hf, V, Cr, In, Sn and ≤0.5 wt% total of Zr, Ti, Ni, Hf, V, Cr, In, Sn, the remainder being Al and unavoidable impurities; and a waterside cladding material clad on at least one side of the core material, said cladding material being made of an aluminium alloy having a potential lower than that of said core material and consisting essentially of 0.5-1.5 wt% of Si, 1.0 to 2.0 wt% preferably 1.4-1.8 wt% of Mn, ≤0.15 wt% Mg, ≤ 0.1% Cu, ≤ 0.7 wt% Fe, ≤1.4 wt%, preferably ≤ 1.1 wt%, most preferably ≤0.4 wt% Zn, ≤0.3 wt% each of Zr, Ti, Ni, Hf, V, Cr, In, Sn and ≤0.5 wt% total of Zr, Ti, Ni, Hf, V, Cr, In, Sn, the remainder being Al and unavoidable impurities, wherein the ratio of wt% Si in the waterside clad to wt% Si in the core is at least 5:1, preferably at least 10:1.

### Detailed description of the invention

The present invention describes a waterside cladding that, in combination with a designated core, provides a good internal corrosion protection with a low Zn content (<1.1 wt%), or preferably <0.4 wt% or no Zn in the waterside cladding. Mg can be added to the waterside cladding to improve the strength and corrosion resistance, but it can cause problems when brazing of folded tube materials. The present invention is especially adapted for thin, folded tube materials but may also be used in other applications. Eliminating both Zn and Mg from the system also provides for better recyclability.

It has been found that a brazing sheet, such as the one disclosed in JP0299325 does not provide sufficient corrosion protection. The ratio of wt% Si in the waterside clad to wt% Si in the core is too low for a sufficient potential gradient to be formed. The Si content of the core is too high for a good long-life effect at the braze cladding side of the brazing sheet.

The brazing sheet of the present invention comprises a core of an aluminium alloy, having on one surface a clad which will be directed towards the coolant side of a heat exchanger manufactured from the brazing sheet, and optionally having a brazing clad on the other surface. The coolant side cladding is hereinafter referred to as the waterside cladding, this cladding being an outermost layer of the brazing sheet, directly in contact with the coolant.

It is an object of the present invention to provide an aluminium alloy brazing sheet that has high strength, has good corrosion resistance on its inner-surface side (coolant side) when being used as a tube for e g heat exchangers, as a header plate, and as a heater core of a radiator. It is also an object of the invention to provide a thin brazing sheet material that has a good workability and may be used in corrosive environments. The present invention describes a brazing sheet with good corrosion performance, especially adapted for thinner materials. It provides a waterside cladding with good erosion properties. The manufacturing process of the brazing sheet of this invention has been chosen in order to provide for an optimal particle size distribution in the waterside cladding after brazing. The present brazing sheet has a Si ratio between core and waterside cladding which has been especially adapted to provide for a potential gradient sufficient for internal corrosion protection. The amount of Zn has, in the present invention, been minimised in the waterside cladding in order to provide a good corrosion protection throughout the whole brazing sheet thickness, especially at thinner gauge. Minimising the number of elements in the system also provides for better recyclability properties.

The brazing sheet of the present invention comprises a core of an aluminium alloy, having on one surface a clad which will be directed towards the coolant side of a heat exchanger manufactured from the brazing sheet, and optionally having a brazing clad on the other surface. The coolant side cladding is hereinafter referred to as the waterside cladding.

Mn is an element that improves the strength of the waterside cladding material, as well as the resistance to erosion corrosion when for example used as a tube in a heat exchanger. When the Mn content is less than 1.0 wt%, the sufficient amount of Mn for particle induced strengthening cannot be obtained and the number of particles for improved erosion corrosion resistance will be too low and the strength cannot be ensured. When the Mn content is more than 2.0 wt% the workability of the cladding material is deteriorated and too large intermetallic particles may be formed which might affect the fatigue properties negatively. Between 1.4 and 1.8 wt% Mn the desired content of small dispersoids ($<0.5\ \mu$m) and larger eutectic particles are obtained which provides for improved erosion corrosion resistance. Therefore the Mn content in the waterside cladding material is set to the range of 1.0-2.0, more preferably to 1.4 to 1.8 wt%.

Si improves the strength of the waterside cladding material by reacting with Mn. When the Si content is less than 0.5 wt%, the number of AlMnSi dispersoids formed is insufficient and the improvement of the strength is not sufficient. Si also lowers the melting point of the cladding and therefore needs to be limited to 1.5 wt%. Therefore the Si content in the waterside cladding material is set to the range of 0.5 to 1.5%.

When the Si-content is lowered the corrosion potential is affected such that the clad becomes more noble, thereby achieving a weaker sacrificial effect, which is undesirable. The Si content of the waterside cladding should also be balanced with the Si content of the core, to obtain the desired sacrificial effect. When the Mn content is high (1.4-1.8%) more Si may be required in the cladding material, since some Si is lost by diffusion into the core and reacts with Mn in the formation of AlMnSi particles.

Zn is added to the cladding material in order to make the corrosion potential of the cladding material low. In this case, when the Cu content in the cladding material is at impurity level a sufficient sacrifice anode effect can be achieved and the corrosion resistance can be maintained, even if the Zn content in the cladding material is less than 1.4 wt%. When the thickness of the core material is decreased or the temperature of the brazing process is high or time at high temperature is long, the Zn of the waterside cladding tends to diffuse deep into the core, which may lead to deteriorated corrosion properties of the brazing sheet. The upper limit for the Zn content has therefore been set to 1.4 wt%, preferably $\leq$ 1.1 wt%, and most preferably $\leq$ 0.4 wt%. Lowering the amount of Zn decrease the effect of high amounts of Zn deep into the core, which can lead to an increased corrosion rate from the braze cladding side.

Zn at high levels will decrease the melting point of the cladding and can potentially make the material more brittle causing problems during rolling. By controlling the amount of Zn a high corrosion resistance can be obtained for thin brazing sheets without having to control the brazing process, i e to use low temperatures or short brazing times to restrict the diffusion of Zn through the core.

Mg is often added to the cladding material to improve strength and to improve corrosion and erosion resistance. However, in CAB brazing of applications with for example folded tubes, the brazing performance can be impaired if Mg is present in high amounts. The Mg content of the waterside cladding according to the invention is therefore 0.15 wt% or less, preferably <0.05% or less.

Cu level must be set low in the waterside cladding since it makes the corrosion resistance inferior. The copper content is set to a maximum of 0.1 wt%, preferably maximum 0.04 wt%, since copper increases the tendency for pitting corrosion. In order to improve recyclability, the clad composition does preferably not contain Ni.

At a Mn content in the core of at least 1.0 wt% a large number of particles can be precipitated during preheating and subsequent hot rolling, and a substantial potential gradient between the core and waterside cladding can be obtained because of the large difference of Mn in solid solution after brazing. The term pre-heating refers to heating the ingot prior to hot-rolling at a temperature not higher than 550°C. Above 2.0 wt% Mn large eutectic particles are formed during casting, which is undesirable in manufacture of thinner tubes. A Mn content of 1.8 wt% or less is desired since primary particles formed during casting will be smaller. A large number of particles provides for a large resistance to sagging at brazing temperatures. Between 1.4 and 1.8 wt% Mn the desired content of small dispersoids and larger eutectic particles is obtained. When in solid solution Mn increases the strength.

The addition of 0.2-1.0 wt% Cu to the core is made to further increase the strength, since copper is a strengthening agent in aluminium when in solid solution. However, Cu increases the hot crack sensitivity during casting, decreases the corrosion resistance and the solidus temperature is lowered. A copper content of 0.6-1.0 wt% is preferred in cases where higher strengths are required.

An addition of Zr causes an increased number of very fine particles, which is beneficial for sagging resistance during brazing. This also provides for larger grains after brazing which is beneficial for the corrosion properties. In order to obtain a good sagging resistance and large grains, and to avoid coarse precipitates during casting, 0.05-0.3 wt% Zr can preferably be added to the core and/or to the waterside alloy.

The concentration of silicon in the core should be ≤0.1 wt% Si, preferably ≤ 0.06 wt%. This causes any corrosion attack to proceed in the lateral direction whereby pitting corrosion is avoided and the corrosion attack becomes lateral. Above 0.1 wt% the ability for formation of a sacrificial layer together with a braze clad layer or waterside layer after brazing is significantly reduced.

When manufacturing an aluminium alloy for use in a brazing sheet according to the present invention, it is impossible to avoid small amounts of impurities. These impurities are not mentioned, nor left out, in the present invention, but will never exceed 0.15 weight% in total. In all embodiments and examples of the present invention the balance consists of aluminium.

The brazing sheet of the present invention, provides high strength and superior corrosion performance both from the waterside cladding and the braze cladding side. The waterside cladding material is particularly suitable to be applied as a corrosion protective coating on such a core material, due to the adapted corrosion potential between the core and cladding The alloy combination makes it possible to make very thin tube materials with sufficient strength and corrosion properties. The brazing sheet advantageously has a thickness of ≤300 $\mu$m, more preferably ≤200 $\mu$m, and the thickness of the waterside clad is preferably ≤30$\mu$m, more preferably less than 20$\mu$m.

It is very important to carefully choose the composition ranges of the different alloying elements of the brazing sheet. Hence, the present invention provides a means for controlling the potential gradients and corrosion properties of the brazing sheet by the use of carefully elaborated contents of Mg, Mn, Si, Cu, Zr and optionally Zn. In this way the thickness of the waterside cladding can be minimized, while a high strength and a high corrosion and erosion resistance is maintained. It is desired to obtain a well balanced improved corrosion performance to meet both the external corrosive situation of vehicles exposed to de-icing salt conditions, and situations with bad quality coolants at the interior side, without relying only on the zinc effect in controlling the corrosion mechanism of the sacrificial waterside clad layer.

Any aluminium braze alloy of the 4XXX-series can be used within the scope of the invention. Thus, the thickness of the braze cladding and the type of the braze cladding, used in the examples of this invention are only to be interpreted as examples.

The core and waterside cladding both have high Mn contents in order to provide a high strength of the brazing sheet. By carefully controlling the difference in Si content in the two materials, a potential gradient is achieved whereby the waterside cladding will be sacrificial to the core. During brazing, the Si in the waterside cladding keeps the amount of solute Mn low mainly in the waterside cladding, by stabilising and possibly forming new alfa-AlMnSi dispersoids so that after brazing there will be a difference in solid solution of Mn in the core and in the waterside cladding. The low Si content in the core allows for a high solute content of Mn since most fine AlMn dispersoid particles formed during processing of the sheet will be dissolved during brazing. This provides for a potential gradient to be formed; a property which is not sensitive to braze cycle or cladding thickness The ratio of Si in the cladding to Si in the core should advantageously be at least 5:1, preferably at least 10:1. With thin brazing sheet and thinner waterside claddings the silicon content of the waterside should therefore preferably be 0.5 wt% or more to ensure that sufficient Si is available to maintain a high level of alfa-AlMnSi dispersoids during brazing. Zn can be added to the waterside cladding to increase the potential gradient further if necessary and make the waterside cladding corrode sacrificially even faster in the surface layer if desired. The present invention however allows the zinc content of the sacrificial clad layer to be applied at lower levels, reducing the negative impact of zinc diffusing deep into the core thereby making the total corrosion performance inferior from the external side. Such a product with reduced zinc content is also beneficial for the recyclability of heat exchanger products, and it also allows for a more flexible production of different types of heat exchangers in the same CAB brazing furnace. This in combination with the effect of copper, maintained at very low levels in the waterside cladding and having a high copper content in the core will enhance the corrosion potential differences further and thereby improve the corrosion performance beside the effect of silicon and manganese.

Furthermore, the waterside cladding has large grains and a high number of intermetallic particles, which make it withstand erosion from flowing liquid. This is obtained by the high content of Mn and the processing route. The core slab and the clad slab is manufactured in a process comprising preheating after casting to no more than 550°C. The erosion properties are important for tubes when a flowing liquid is present in the system, as for example in a radiator or a heater core. The waterside cladding of the present invention is especially tailored to be erosion resistant. The erosion resistance is dependent on particle fraction and size distribution; particles containing Al-Si-Fe-Mn in a controlled number is beneficial for the material to withstand erosive action. The waterside alloy of the present invention has an adapted particle area fraction. The area fraction in the as brazed condition is dependent on composition, process (especially pre-heating procedures), and braze cycle. This is achieved by the method according to the present invention for producing AlMn sheets in which a waterside cladding rolling slab is produced from a melt which contains (in weight-percent) 0.5-1.5% Si, 1.0 to 2.0% preferably 1.4-1.8% of Mn, ≤0.15% Mg, ≤ 0.1% Cu, ≤ 0.7% Fe, ≤1.4%, preferably ≤ 1.1%, most preferably ≤0.4% Zn≤0.3 wt% each of Zr, Ti, Ni, Hf, V, Cr, In, Sn and ≤0.5 wt% total of Zr, Ti, Ni, Hf, V, Cr, In, Sn, the balance consisting of aluminium and unavoidable impurities. All amounts of alloying elements given are in weight percent.

The rolling slab is prior to hot rolling preheated at a preheating temperature of less than 550°C to control the number and size of dispersoid particles (particles precipitated from supersaturated solid solution), whereafter the preheated rolling slab is hot rolled into a hot strip to appropriate dimensions. Normal total hot rolling height reduction of the waterside strip thickness is dependent on final gauge and thickness of waterside cladding, but is typically >70%. The hot strip exit gauge for the waterside cladding is typically in the range from 25 to 100 mm. It is welded onto a core slab which has been produced from a melt which contains <0.1%, preferably <0.06% Si, 1.0 to 2.0% preferably 1.4-1.8% of Mn, ≤0.35% Mg, ≤ 0.2-1.0%, preferably 0.6-1.0% Cu, ≤ 0.7% Fe, ≤0.3 wt% each of Zr, Ti, Ni, Hf, V, Cr, In, Sn and ≤0.5 wt% total of Zr, Ti, Ni, Hf, V, Cr, In, Sn, the balance consisting of aluminium and unavoidable impurities.. The clad slab is preferably preheated at a preheating temperature of less than 550°C. It is hot-rolled and further cold-rolled to final gauge. The coil is preferably temper annealed at final gauge. The waterside cladding material produced in this way has a microstructure after brazing comprising a number density of particles in the range between 0.5 and $20 \times 10^5$ particles per $mm^2$, preferably between 1 and $12 \times 10^5$ particles per $mm^2$, most preferably between 2 and $9 \times 10^5$ particles per $mm^2$, the particles having an equivalent diameter in the range of 50-500 nm, and a number density of particles in the range between 1-20 $\times 10^3$ particles per $mm^2$, preferably between 7-15 $\times 10^3$ particles per $mm^2$ the particles having an equivalent diameter in the range of >500 nm.

The majority of these fine particles are created during the preheating prior to hot rolling. Typical brazing conditions include heating to a temperature of 580-630°C, e.g. about 600°C, with a dwell time of 2-5 minutes, typically around 3 minutes. A description on how the particle density was measured is described in Example 3.

The present invention has a Si ratio between clad and core which has been optimised for providing the best corrosion performance. The ratio of wt% Si in the clad to wt% Si in the core should be at least 5:1, preferably at least 10:1, given that the other elements are within the scope of this invention.

The brazing sheet may have an Al-Si braze clad applied directly to it on the opposite side from the cladding, said braze clad comprising 5-13 wt% Si. When the core has a braze cladding on the opposite side of the waterside cladding, the low silicon content in the core provides for a sacrificial layer to be formed and corrosion proceeds only in the lateral direction also on the braze cladding side. The excellent corrosion resistance of this core material has previously been shown in EP1580286. When the brazing sheet incudes a braze clad, no intermediate layer is needed on the brazing side of the brazing sheet, which is an advantage from an economical point of view. Recycling of the material is also made easier when no intermediate layer with a composition different to that of the core is used.

The corrosion protection of a brazing sheet including a braze clad is excellent because of potential gradients created at both the inner and outer sides. At the outer surface, facing the air-side, a sacrificial anodic long-life layer is created during brazing at a sub-surface level. Fine particles in the core that contain Al, Mn, and Si are precipitated close to the braze clad surface due to inward diffusion of Si from the braze cladding. This lowers the Mn in solid solution in this zone compared to the core. At larger depths of the core where silicon does not reach most of AlMn fine dispersoid particles are dissolved during the brazing operation and the amount of solute Mn is increased. This difference in solute Mn between the sacrificial anodic sub-surface layer after brazing operation results in a potential gradient between the outer surface and the core giving an excellent corrosion performance.

Also the process for producing such a brazing sheet has been optimised in order to reach the best performance of the brazing sheet. The final profile of Mn, Cu, and Si in solid solution, and thereby its corrosion protection, after brazing is dependent on the process history of the sheet.

The ingot of the brazing sheet is pre-heated <550°C, prior to hot-rolling. This process route is chosen in order to produce a core material with a large amount of Mn-containing dispersoids that are sufficiently small to dissolve during brazing and thereby maximise the amount of Mn in solid solution. Temper H24 is also preferred compared to temper H14. It has been found that the potential gradient from the outer, braze cladding side, is sharper when the material is produced in temper H24 than temper H14.

Therefore, the temper of the core of the aluminium alloy brazing sheet according to the invention preferably is H24, and the core slab and the clad slab are advantageously manufactured in a process comprising preheating after casting to no more than 550 °C.

Hereinafter embodiments of the present invention will be described by way of example.

**Examples**

**Example 1**

The concentration profiles were calculated by using an erf-solution to Fick's second law of diffusion (Formula 1). The terms and definitions are given in Table 1. The activation energy Q and maximum diffusion constant Do for these alloy systems were verified against experimental data (EPMA, Electron Probe Micro Analysis). For Cu, Q of 130 kJ/mol in combination with $D_0 = 6.5 \cdot 10^{-5}$ $m^2$/s.was used For Zn, Q of 114 kJ/mol in combination with $D_0 = 2.59 \cdot 10^{-5}$ $m^2$/s.was used.

The concentration "C", at a distance "y" from the waterside cladding surface after brazing, was calculated using the formula:

$$C = C_{core} + 0.5^* \Delta C(Erf(A) - Erf(B)) \tag{1}$$

$$A = (y+h)/\sqrt{(4Dt)} \tag{2}$$

$$B = (y-h)/\sqrt{(4Dt)} \tag{3}$$

$$D = D_0 e^{-Q/RT} \tag{4}$$

**Table 1** Terms and definitions for diffusion calculation.

| Term | Sort | Definition |
|---|---|---|
| $C_{core}$ | wt% | initial concentration in core |
| $C_{waterside}$ | wt% | initial concentration in waterside cladding |
| $\Delta C$ | wt% | $C_{waterside} - C_{core}$ |
| y | $\mu$m | distance from waterside cladding surface |
| h | $\mu$m | thickness of waterside cladding |
| D | $m^2$/s | diffusion constant (temperature dependence taken into account) |
| Do | $m^2$/s | maximum diffusion constant (at infinite temperature) |
| Q | J/mol | activation energy for diffusion |
| R | J/K mol | gas constant |
| T | K | absolute temperature |

The corrosion potential profiles have been calculated based on Formula 5. There is a linear relationship between elemental concentration and corrosion potential at small levels up to the maximum solid solubility of each component in aluminium (Corrosion of Aluminum and Aluminum Alloys), Edt J.R. Davis, ASM International 2000). For simplicity the effects of different elements are considered to be additive. The corrosion potential for a certain aluminium alloy, $E_{alloy}$, with the amount of element in solid solution (ss) can be described by Formula 5.

$$E_{alloy} = E_{Al} + \%Mn_{ss}^* \Delta E_{Mn} + \%Si_{ss}^* \Delta E_{Si} + \%Cu^* \Delta E_{Cu} + \%Zn^* \Delta E_{Zn} \tag{5}$$

The corrosion potential contribution to the pure aluminium matrix ($\Delta E_{\text{etement solid solution}}$) for the various alloying elements is given in Table 2. $E_{Al}$ (potential of aluminium without alloying elements) was measured to -755 mV vs SCE (Standard Calomel Electrode) according to ASTM G69. A braze cycle of 20 min heating and 3 minutes at 600°C was used for both experimental and calculated data.

Table 2 The corrosion potential contribution to the pure aluminium matrix ($\Delta E_{\text{element solid solution}}$) for the various alloying elements (data from Corrosion of Aluminum and Aluminum Alloys), Edt J.R. Davis, ASM International 2000).

| Element | $\Delta E_{\text{element solid solution}}$ (mV/wt%) |
|---|---|
| Mn | +55 |
| Si | +20 |
| Cu | +50 |
| Zn | -90 |

Resistivity and TEP measurements were used to calculate the conductivity and Mn in solid solution. Si in solid solution was also estimated from these results, but these concentrations are uncertain. The following assumptions were made: the zirconium content was 0.1 wt%, all copper is in solid solution and the iron precipitated. The calculated concentrations post brazing are given in Table 3. These were used as input data for the potential calculations. The Cu and Zn amounts that were used as input data for the potential calculations were calculated using Formula 1.

Table 3 Typical post braze contents in wt% of Mn and Si in solid solution.

| | Post braze Mn$_{ss}$ | Post braze Si$_{ss}$ |
|---|---|---|
| Core I | 0.9 | 0.04 |
| Clad A-C | 0.25 | 0.18 |

The present invention has a Si ratio between clad and core which has been optimised for providing the best corrosion performance. The ratio of wt% Si in the clad to wt% Si in the core should be at least 5:1, preferably at least 10:1. The corrosion potential difference, post brazing, between surface of the waterside cladding and the core has been calculated for a number of compositions as given in Table 4-6. The total gauge was in the Brazing Sheet Examples chosen to be 150 $\mu$m and the waterside cladding thickness 30 $\mu$m. The Si-ratio in the examples is 17. After brazing the amount of Mn in solid solution in the waterside cladding is much lower than in the core. More Mn is bound up in particles containing Al-Si-Fe-Mn in the waterside cladding than in the core due to the adapted Si ratio used in the present invention. The potential difference given for cladding A with no Zn, in combination with core I, is 63 mV, as given by Table 6.

Table 4 Core composition in wt%.

| Core | Si | Mn | Cu | Fe |
|---|---|---|---|---|
| Core I | 0.05 | 1.7 | 0.8 | 0.2 |

Table 5 Waterside cladding composition in wt%.

| Cladding | Si | Mn | Zn | Fe | Cu |
|---|---|---|---|---|---|
| A | 0.85 | 1.7 | 0.0 | 0.2 | 0 |
| B | 0.85 | 1.7 | 0.4 | 0.2 | 0 |
| C | 0.85 | 1.7 | 1.5 | 0.2 | 0 |

Table 6 Examples.

| Brazing Sheet Example | 1 | 2 | 3 | 4 |
|---|---|---|---|---|
| Core | I | I | I | I |

(continued)

| Brazing Sheet Example | 1 | 2 | 3 | 4 |
|---|---|---|---|---|
| Cladding | A | B | C | A |
| $Si_{clad}/Si_{core}$ | 17 | 17 | 17 | 17 |
| Total gauge ($\mu$m) | 150 | 150 | 150 | 200 |
| Waterside thickness ($\mu$m) | 30 | 30 | 30 | 20 |
| $\Delta E_{surface-core}$ (mV) | 63 | 78 | 120 | 54 |
| Zn-gradient core-zone ($10^{-3}$ wt%/$\mu$m) | - | 1.9 | 7.1 | - |
| Potential gradient core-zone (mV/$\mu$m) | 0.23 | 0.43 | 0.86 | -* |
| *) Not calculated. | | | | |

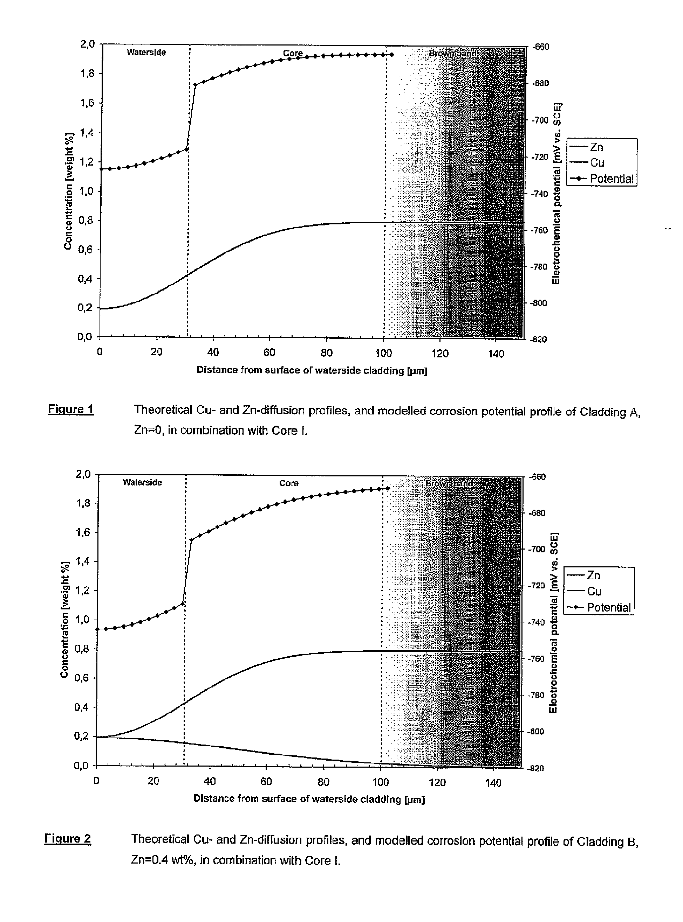

Figure 1-3 shows the corrosion potential profiles, Cu-, and Zn-diffusion profiles after brazing for core I in combination with cladding A-C respectively. The waterside cladding 30$\mu$m thickness is marked in the diagram. In these examples it is assumed that at the opposite side, outer surface, a braze cladding is present. Another corrosion protecting cladding may also be used. When a braze cladding is present, a long-life layer is created during brazing at the outer surface. Fine particles that contain Al, Mn, and Si are precipitated close to the braze clad surface due to inward diffusion of Si. This lowers the Mn in solid solution in this zone compared to the core and results in a potential gradient between the outer surface and the core. This long-life layer can also be referred to as the brown band, which is marked in the figures. The extension of the brown band, from the braze clad/core interface, is typically 40-50 $\mu$m. The core-zone is defined as the distance between the waterside cladding/core interface and the brown band/core interface (in this example the 30-100 $\mu$m middle zone of the material). The potential has not been calculated in the brown band in these examples, but is typically around 30-60 mV lower than the core potential in the alloys covered by this invention.

From Figures 1-3 the effect of adding Zn to the waterside cladding for thin gauge materials is clearly visible. Three initial Zn-contents are described: 0, 0.4, and 1.5 wt% Zn. When 1.5 wt% Zn is used in the waterside cladding, the indiffusion distance is around 100 $\mu$m from the waterside cladding/core interface. For thin gauge materials, e g 150 $\mu$m, it means that the Zn-gradient reach into the brown-band. A Zn-gradient has been calculated in the core zone (Table 3), that is the zone between the waterside cladding/core interface and the core/brown band interface. The Zn-gradient in the core will affect the external corrosion protection of a thin brazing sheet. When the external corrosion has progressed beyond the sacrificial brown band, it may proceed into the core. If the Zn gradient is sharp, then the corrosion is likely to progress faster. The potential profile is also shown in Figures 1-3. In Brazing Sheet Example 3 with 1.5% Zn, there is a potential gradient throughout the whole core. This is not optimal for good corrosion protection from both the internal and the external side; there should be a stable core potential present at least in the centre of the core. Brazing Sheet Example 1 shows a waterside cladding with no Zn. The core potential is stable throughout half of the core thickness. Brazing Sheet Example 2 shows the situation for a waterside cladding with 0.4 wt% Zn. The Zn-gradient is lower than for 1.5 wt% Zn and the potential of the core has not been affected to as large extent as the 1.5 wt% Zn case. Brazing Sheet Examples 1 and 2 are better from an external corrosion perspective than Brazing Sheet Example 3.

When the material is exposed to corrosive environments both on the external and internal side, the material combination in Brazing Sheet Example 3 is expected to withstand corrosive attacks less well than Brazing Sheet Examples 1 and 2. The core is expected to be consumed quicker and there is a greater risk for perforation.

## Example 2

Another aspect of the present invention is the internal corrosion protection. The potential difference between the surface of the waterside cladding and the core of Brazing Sheet Example 1 is 63 mV. In Brazing Sheet Example 4 (Table 6), where a thinner waterside cladding is used the potential difference after brazing is 54 mV. The internal corrosion performance of this material was tested.

Material sheet specimens E and D were made by using a core with a composition given in Table 7. Hot-rolled material of said core material was used which was originally clad with 10% AA4343 braze cladding and 10% waterside cladding. The waterside cladding was removed and replaced with waterside claddings, according to the compositions in Table 8.

Table 7 The chemical composition of the core, in wt-%, measured by OES.

|  | Si | Fe | Cu | Mn | Mg | Zn | Zr | Ti |
|---|---|---|---|---|---|---|---|---|
| Core | 0.05 | 0.2 | 0.8 | 1.7 | <0.01 | <0.01 | 0.13 | 0.03 |

Table 8 The chemical composition of the waterside alloys, in wt-%, measured by OES.

| Waterside | Si | Fe | Cu | Mn | Mg | Zn | Zr | Ti |
|---|---|---|---|---|---|---|---|---|
| D | 0.8 | 0.2 | <0.01 | 1.7 | <0.01 | <0.01 | <0.01 | <0.01 |
| E | 0.8 | 0.2 | <0.01 | 1.6 | <0.01 | 2.7 | <0.01 | <0.01 |
| F | 0.9 | 0.3 | < 0.01 | 1.6 | 0.02 | 1.3 | 0.1 | <0.01 |

Specimen E is a comparative example. The material package thickness was further reduced by cold-rolling in a lab-mill to the appropriate dimensions and was subjected to a final heat-treatment to temper H24.

All specimens were braze simulated in a CAB batch furnace. The sheets were placed in pairs with the waterside claddings facing each other to minimise zinc evaporation. A thermal cycle was used, which included raising the temperature from room temperature to 600°C in 20 min, 3 min dwell time at the maximum temperature. Cooling was performed in air at a rate of ~2.4°C/s. Although the cooling rate is arbitrary, it is desirable that the cooling rate is high.

All specimens comprise the core given in Table 7, a AA4343 braze cladding, and a waterside cladding as given in Table 8. The gauge and cladding thicknesses were measured by Light Optical Microscopy on polished samples.

The internal corrosion behaviour was evaluated using a beaker test. Test coupons of 40x80 mm were prepared from each material combination. They were degreased in a mild alkaline degreasing bath (Candoclene). The braze cladding sides were masked with adhesive tape. Four test coupons were immersed in each glass beaker containing 400 ml of a so called "OY-water" solution. The OY-water composition was 195 ppm $Cl^-$, 60 ppm $SO_4^{2-}$, 1 ppm $Cu^{2+}$, and 30 ppm $Fe^{3+}$. It was prepared using NaCl, $Na_2SO_4$ $CuCl_2 \cdot 2H_2O$, and $FeCl_3 \cdot 6H_2O$ in deionised water. The beaker was placed on a hot-plate with magnetic stirring which could be adjusted with a timer. The temperature cycle was set at 88°C for 8 hours and room temperature for 16 hours. Stirring was applied during the 8 hour heating periods only. The test was performed over a two week period using the same test-solution throughout. Duplicate samples of each material combination were analysed. After testing, the coupons were immersed in $HNO_3$ for 10-15 minutes and rinsed in deionised water. Pit depth analysis was made using the Microscopy Method according to ISO 11463. Cross-sections were studied in a light optical microscope for a more detailed analysis of the type of corrosive attack and the pit depth. Perforations were counted if present, but any perforations closer than 5 mm to the edges were omitted.

Table 9 shows the results from internal corrosion testing. The number of perforations (total on two test coupons) are given. Table 10 shows the pit depth of specimens D and E. D is within the scope of this invention and E is a comparative example.

Table 9 Number of perforations after internal corrosion testing.

| Specimen | Waterside cladding | Gauge ($\mu$m) | Waterside cladding thickness ($\mu$m) | Number of perforations |
|---|---|---|---|---|
| D | D | 210 | 22 | 0 |
| E | E | 202 | 20 | 0 |

Table 10 Pit-depth results from the focusing method after two weeks of internal corrosion testing.

| Specimen | Waterside cladding | Gauge ($\mu$m) | Waterside cladding thickness ($\mu$m) | Average pit depth ($\mu$m) | Standard dev. ($\mu$m) |
|---|---|---|---|---|---|
| D | D | 210 | 22 | 110 | 28 |
| E | E | 202 | 20 | 136 | 29 |

The internal corrosion results show that the potential gradient of specimen D is sufficient for this material combination to withstand the internal corrosion test. The pit depth is somewhat smaller than for specimen E which contains 2.5 wt% Zn.

## Example 3

Another aspect of the present invention is the particle distribution. Material with a core composition according to Table 7 and waterside cladding F from Table 8, was used for analysis. The waterside cladding ingot was preheated at a temperature <550°C and the slab was hot-rolled with a total reduction of 90%. The waterside slab was welded onto the core ingot; on the opposite side a AA4343 braze cladding slab was welded. The package was pre-heated at a temperature <550°C and hot-rolled with a total reduction of 99% to 3.9 mm. The slab was further reduced to final gauge 0.270 mm by cold-rolling. The coil was temper annealed to temper H24.

Material from the coil described above was braze simulated in a CAB batch furnace. Two thermal cycles were used: one which included raising the temperature from room temperature to 610°C in 20 min, followed by a dwell time of 3 minutes at the maximum temperature. A second thermal cycle was used similar to the previous, but with a maximum temperature of 585°C. Cooling was performed under inert atmosphere a rate of ~0.50°C/s.

To measure the particle density of the material sections were cut in the longitudinal, ND-RD, plane of the strip. The sections were mechanically polished using Struers OP-S suspension, containing 0.04 $\mu$m colloidal silica, in the last preparation step. The area cross-sections of the particles were measured in a FEG-SEM, Philips XL30S, using an image analysis system from Oxford Instruments, IMQuant/X.

Images for the measurements were recorded in the backscatter mode using the "in-lens" detector in the microscope. In order to minimize the information depth and to get a good spatial resolution in the backscatter image, a low acceleration voltage, 3 kV, was used.

Common grey level threshold was used to detect the particles. In order to obtain a result that is representative of the number and distribution of the particles in the sample, the measured image frames were spread over the cross section. Measurements were made in two steps. The first was made of smaller dispersoids (particles with an equivalent diameter <500 nm). More than 1000 dispersoids were measured. The area, A, of each particle is measured and an equivalent particle diameter is calculated as $\sqrt{(4A/\pi)}$. The second measurement was made on constituent particles (particles with an equivalent diameter >500 nm). The measurement was made on an image field covering around 80% of the cladding thickness. 100 such image fields were analysed.

The sample had after brazing at 610°C for 2 min a number density of dispersoids within the size range 50-500 nm of $3.9 \times 10^5$ particles per mm$^2$. The samples had after brazing a number density of constituent particles within the size range >500 nm of $1 \times 10^4$ particles per mm$^2$. The sample had after brazing at 585°C for 2 min a number density of dispersoids within the size range 50-500 nm of $6.8 \times 10^5$ particles per mm$^2$. The samples had after brazing a number density of constituent particles within the size range >500 nm of $1 \times 10^4$ particles per mm$^2$.

## Example 4

The corrosion potential profiles were measured on both temper H24 and temper H14 material, from the braze cladding side, after CAB brazing according to Example 2. Corrosion potential measurements were made at 6-8 depths, starting from the outer surface of the residual braze cladding and progressing into the core. The samples were etched in hot NaOH to the different depths (backside was masked with adhesive tape). After etching, the samples were cleaned in conc. HNO$_3$ and rinsed in deionised water and ethanol. The thickness of each sample was measured by a micrometer before and after etching to determine the depth.

The test coupons were masked using adhesive tape on the back side and nail varnish to cover the edges. The active area after masking was ~20x30 mm. The electrochemical measurements were performed using a Solartron IMP process logger. A Standard Calomel Electrode (SCE) was used as reference electrode. The samples were immersed in an acidified solution electrolyte (ASTM D1141 without heavy metals at pH 2.95). 10 ml of H$_2$O$_2$ per litre electrolyte solution was added at the start of the measurements. The open circuit potential (OCP) was monitored as a function of depth by etching samples prior to measurement.

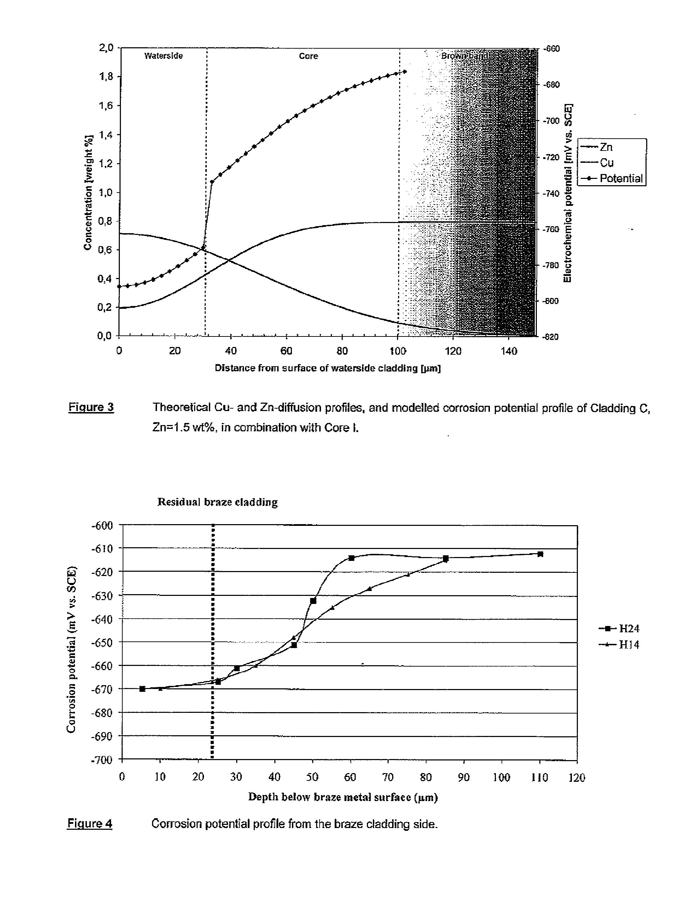

The corrosion potential profiles are shown in Figure 4. It can be seen that temper H24 material provides a steeper corrosion potential profile than temper H14 material, which provides for a better corrosion protection.

## Claims

1.   An aluminium alloy brazing sheet comprising: a core material made of an aluminium alloy consisting of
   $\leq 0.1$ wt% Si, most preferably $\leq 0.06$wt% Si,
   $\leq 0.35$ wt% Mg,

from 1.0 to 2.0 wt%, preferably 1.4 to 1.8 wt% Mn,
from 0.2 to1.0, preferably 0.6 to 1.0 wt% Cu, ,
$\leq$ 0.7 wt% Fe
$\leq$ 0.3 wt% each of Zr, Ti, Ni, Hf, V, Cr, In, Sn and
$\leq$ 0.5 wt% total of Zr, Ti, Ni, Hf, V, Cr, In, Sn
the remainder being Al and unavoidable impurities;
and a waterside cladding material clad on at least one side of the core material, said cladding material being made of an aluminium alloy having a potential lower than that of said core material and consisting essentially of
0.5-1.5 wt% of Si,
1.0 to 2.0 wt% preferably 1.4-1.8 wt% of Mn,
$\leq$ 0.15 wt% Mg,
$\leq$ 0.1 % Cu,
$\leq$ 0.7 wt% Fe,
$\leq$ 1.4 wt%, preferably $\leq$ 1.1 wt%, most preferably $\leq$0.4 wt% Zn,
$\leq$ 0.3 wt% each of Zr, Ti, Ni, Hf, V, Cr, In, Sn and
$\leq$ 0.5 wt% total of Zr, Ti, Ni, Hf, V, Cr, In, Sn
the remainder being Al and unavoidable impurities,
wherein the ratio of wt% Si in the waterside clad to wt% Si in the core is at least 5:1, preferably at least 10:1.

2. The aluminium alloy brazing sheet according to claim 1, wherein the core material contains $\leq$0.05-0.3 wt% Zr.

3. The aluminium alloy brazing sheet according to any of claims 1-2, wherein the clad material contains $\leq$0.05-0.3 wt% Zr.

4. The aluminium alloy brazing sheet according to any of claims 1-3, wherein the clad composition does not contain Ni.

5. The aluminium alloy brazing sheet according to any of claims 1-4, wherein the Mg content in the clad is <0.05%.

6. The aluminium alloy brazing sheet according to any of claims 1-5, wherein the copper content of the cladding is <0.04wt%.

7. The aluminium alloy brazing sheet according to claim 1-6, wherein the thickness of the brazing sheet is less than $\leq$300 um, preferably $\leq$200 um.

8. The aluminium alloy brazing sheet according to any of claims 1-7, wherein the waterside cladding $\leq$30um.

9. The aluminium alloy brazing sheet according to any of claims 1-8, wherein the core has an additional Al-Si braze clad directly applied to it on the opposite side from the cladding, said braze clad comprising 5-13 wt% Si.

10. The aluminium alloy brazing sheet according to any of claims 1-9, wherein the temper of the core is H24.

11. The aluminium alloy brazing sheet according to claim 1-10, wherein the brazing sheet is made from a core slab and a clad slab, said core slab and clad slab being manufactured in a process comprising preheating after casting to no more than 550 °C.

12. The aluminium alloy brazing sheet according to claim 1-11, **characterised in that** it has a waterside cladding with a microstructure after brazing comprising a number density of particles in the range between 0.5 and 20 x $10^5$ particles per mm$^2$, preferably between 1 and 12 x $10^5$ particles per mm$^2$, most preferably between 2 and 9 x $10^5$ particles per mm$^2$, the particles having an equivalent diameter in the range of 50-500 nm, and a number density of particles in the range between 1-20 x $10^3$ particles per mm$^2$, preferably between 7 and 15 x $10^3$ particles per mm$^2$ the particles having an equivalent diameter in the range of >500 nm.

**Figure 1**   Theoretical Cu- and Zn-diffusion profiles, and modelled corrosion potential profile of Cladding A, Zn=0, in combination with Core I.

**Figure 2**   Theoretical Cu- and Zn-diffusion profiles, and modelled corrosion potential profile of Cladding B, Zn=0.4 wt%, in combination with Core I.

Figure 3    Theoretical Cu- and Zn-diffusion profiles, and modelled corrosion potential profile of Cladding C, Zn=1.5 wt%, in combination with Core I.

Figure 4    Corrosion potential profile from the braze cladding side.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 0299325 A

- EP 1580286 A

**Non-patent literature cited in the description**

- Corrosion of Aluminum and Aluminum Alloys. ASM International, 2000